# EUROPÄISCHE PATENTSCHRIFT

(11) **EP 1 653 833 B1**
(45) Veröffentlichungstag und Bekanntmachung des Hinweises auf die Patenterteilung: **08.11.2006**
(21) Anmeldenummer: 04738889.7
(22) Anmeldetag: 08.07.2004
(51) Int. Cl.: A47J 37/00, F24C 15/16

(54) **GARGERÄT ZUM REGENERIEREN VON GARGUT**
COOKING DEVICE FOR REGENERATING AN ITEM TO BE COOKED
APPAREIL DE CUISSON SERVANT A REGENERER UN ARTICLE A CUIRE

(30) Priorität: 13.08.2003 DE 10337161
(43) Veröffentlichungstag der Anmeldung: 10.05.2006
(73) Patentinhaber: Rational AG, 86899 Landsberg/Lech (DE)
(72) Erfinder: JÜRGENS, Andrea, 85551 Kirchheim (DE); GREINER, Michael, 85354 Freising (DE); FUNK, Gerd, 86899 Landsberg (DE); TREU, Thomas, 80469 München (DE)
(74) Vertreter: Weber-Bruls, Dorothée
(86) Internationale Anmeldenummer: PCT/DE2004/001473
(87) Internationale Veröffentlichungsnummer: WO 2005/016096

(56) Entgegenhaltungen:
- WO-A-02/067687
- GB-A- 2 380 923

## Beschreibung

Die vorliegende Erfindung betrifft ein Gargerät zum Regenerieren von Gargut in einem Regenerierungsraum, in dem zumindest zwei Regenerierungsebenen, insbesondere jeweils festgelegt durch einen Einschub, in unterschiedlichen Höhen angeordnet oder anordbar sind, wobei jeder Regenerierungsebene eine nach Ablauf einer eingestellten oder einstellbaren Regenerierungsdauer einen Alarm auslösende Uhr zugeordnet ist.

Gattungsgemäße Gargeräte zum Regenerieren von Gargut sind aus dem Stand der Technik hinlänglich bekannt. Sie umfassen einen Regenerierungsraum bzw. Garraum, in den auf unterschiedlichen Ebenen Einschübe mit Gargut eingebracht werden können. Solche unterschiedlichen Ebenen können beispielsweise durch ein Hordengestell oder dergleichen gebildet werden. Das Gargut wird in dem Garraum regeneriert, z.B. erwärmt.

Die DE 43 24 015 C1 beschreibt ein gattungsgemäßes Gargerät in Form eines Großküchengargeräts mit einer Vielzahl von mit zu garenden Speisen beladbaren Einschüben, bei dem jedem Einschub jeweils zumindest ein beim Beladen automatisch betätigbarer Schalter sowie ein mit dem zumindest einen Schalter verbundener, auf die gewünschte Garzeit einstellbarer Zeitzähler zugeordnet ist. Zudem ist eine Beladungsanzeige vorgesehen, welche für jeden Einschub mit Hilfe der Schalter und der Zeitzähler anzeigt, ob der Einschub beladen und ob die im Einschub befindliche Speise fertig gegart ist. Bei diesem Großküchengargerät ist jeder Einschub mit einer Sensorik versehen, die ein Signal auslöst, wenn ein Einschub beladen wird, bspw. wenn ein in den Einschub eingeschobener Behälter einen an dem Einschub angeordneten Schalter kontaktiert. Kann ein solcher Kontakt aus beliebigen Gründen nicht erfolgen, erfolgt keine Signalgebung der entsprechenden Sensorik. Vor dem Einschieben des Behälters wird bei den bekannten Gargeräten die Regenerierungsdauer bzw. Garzeit der eingeschobenen Speise über einen Drehknopf zum Einstellen des Zeitzählers eingegeben.

Die DE 33 16 221 A1 beschreibt einen Umluft-Backofen, in den mehrere Backroste eingeschoben werden können. Dieser Umluft-Backofen umfaßt eine Heizeinrichtung, die ihrerseits wiederum je einen an einem von mehreren in den Backofen einschiebbaren Backrosten angebauten Strahlungsheizkörper umfaßt, welcher in der eingeschobenen Lage des Backrosts mit einer Schalt- und Steuereinrichtung des Backofens elektrisch verbunden ist, wobei die Schalt- und Steuereinrichtung dazu ausgebildet ist, wahlweise einen einem Umluftgebläse zugeordneten Heizkörper und/oder die Heizkörper der Bratroste mit Strom zu speisen.

Aus der DE 90 07 085 U1 ist eine Vorrichtung zum Erhitzen von Nahrungsmitteln bekannt, deren Garraum in mindestens zwei voneinander abteilbare Zonen aufgeteilt ist, wobei in diesen Zonen unterschiedliche Behandlungstemperaturen, insbesondere zum Übererhitzen eines Dampfes in einer kleineren Zone des Garraums, herrschen. Unterschiedliche Regenerierungszeiten sind nicht einstellbar.

Die DD 229 588 A1 beschreibt eine Vorrichtung zum Kühlen, Erwärmen und Garen von Speisen, wobei zunächst zubereitete Speisen in einen Kühlteil eingeschoben und dann an einem Bedienungstableau ein Kühlprozeß und der Zeitpunkt der Überführung sämtlicher Speisen in einen Erhitzungsteil sowie die Temperaturhöhe und Zeitdauer der Erwärmung im Erhitzungsteil eingestellt werden können. Möglich ist auch, daß lediglich Speisen bestimmter Registerfächer aus dem Kühlteil in den Erhitzungsteil überführt werden, um die Anzahl benötigter Speisen je nach Bedarf anpassen zu können.

Aus der EP 0 313 768 B2 ist ein parametergesteuertes System in einem Ofen zum Erhitzen eines Nahrungsmittels bekannt. Als Parameter kommen dabei die Temperatur, der volumetrische Durchsatz, die Feuchtigkeit und die Zirkulation eines Wärmemediums in Betracht. Das System umfaßt ferner einen hörbaren Alarm, wenn eine vorgegebene Erhitzungszeit abgelaufen beziehungsweise eine entsprechende Kochkurve durchlaufen worden ist, ohne Individualisierung nach Ebenen im Garraum.

Ein ähnliches Gargerät ist aus des WO 02 067 687 bekannt.

Die EP 0 737 423 B1 betrifft eine Einrichtung zur automatischen Behandlung von Kühlgut, Gargut und Backwaren sowie ein dazu geeignetes Verfahren. In der Einrichtung können gleichzeitig mehrere Gar- und/oder Backvorgänge stattfinden. Ein Garvorgang wird beispielsweise beendet, wenn ein Kerntemperaturmesser innerhalb eines Garguts die erforderliche Temperatur gemessen hat.

Die EP 1 275 333 A1 beschreibt ein Dampfgargerät mit mehreren Garebenen in einem Garraum, wobei jeweils separate Temperaturmesseinrichtungen in mindestens zwei Garebenen angeordnet sind. Mit diesem Dampfgargerät ist es möglich, eine steuerbare Temperaturverteilung in allen horizontal angeordneten Garebenen zu erreichen. Je nach Wunsch können dabei gezielt entweder eine gleichmäßige Temperaturverteilung im gesamten Garraum oder unterschiedliche Temperaturen in den einzelnen Garebenen eingestellt werden, wodurch ein gleichzeitiger Beginn und ein gemeinsames Ende beim Garen von Gargut mit unterschiedlichen Garzeiten ermöglicht wird.

Auch die Mikrowellenöfen der US 4,390,965 zielen darauf ab, ein gleichzeitiges Ende unterschiedlicher Regenerierungs- oder Garverfahren in mehrere Mikrowellenöfen herbeizuführen. Zu diesem Zweck wird ein elektronisches System vorgeschlagen zum Regenerieren einer Vielzahl von Gargutportionen in einer gleichen Anzahl von Mikrowellenöfen. Ausgehend von der längsten Zeitdauer, die zum Regenerieren von Gargut in einem bestimmten Mikrowellenofen eingegeben worden ist, läuft die eingestellte Regenerierungszeit ab, so daß schließlich alle Mikrowellenöfen gleichzeitig ihr Gargut regeneriert beziehungsweise gegart haben.

Die WO 99/55212 offenbart ein Verfahren, eine Vorrichtung und ein Behältnis zur Erwärmung vorgefertigter Speisen, wobei die Speisen mit Induktionsheizspulen und Heißdampf in abgschlossenen Räumen gleichzeitig und einheitlich erwärmt werden.

Nachteilig bei den Gargeräten aus dem Stand der Technik ist es, daß diese nicht einfach und flexibel gehandhabt werden können, um eine Vielzahl von Gargütern zu unterschiedlichen Zeiten in das Gargerät einzustellen und nach einem individuell gewünschten Zeitablauf einzeln aus dem Gargerät entnehmen zu können. Vielmehr ist der Einsatz einer aufwendigen Sensorik in Wirkverbindung mit jedem einzelnen Einschub einer Vielzahl von Einschüben für eine Individualisierung erforderlich, was kostenintensiv ist. Ferner ist es mit den gattungsgemäßen Gargeräten lediglich möglich, Gargut zu unterschiedlichen Zeiten auf Einschüben einzuführen und zufriedenstellend fertiggestellt zu entnehmen, die einen Kontakt mit einem Schalter an dem entsprechenden Einschub auslösen. Auch die individuelle Einführung und Entnahme von einzelnen Tellern auf vorhandenen Einschüben kann mit den gattungsgemäßen Gargeräten zeitlich nur sehr aufwendig überwacht werden.

Der vorliegenden Erfindung liegt daher die Aufgabe zugrunde, ein gattungsgemäßes Gargerät derart weiterzuentwickeln, dass es die Nachteile des Stands der Technik überwindet, insbesondere ein einfaches, flexibles und übersichtliches Regenerieren von Gargütern mit unterschiedlichen Einbringungs- und Entnahmezeiten ermöglicht.

Diese Aufgabe wird erfindungsgemäß gelöst, durch ein Bedienelement mit einer Eingabeeinheit zum manuellen Initiieren der Uhr jeder mit Gargut beschickten Regenerierungsebene und mit einer Displayeinheit zum Anzeigen einer für eine initiierte Uhr charakteristische Zeitspanne.

Bevorzugt ist es dabei, dass die Regenerierungsdauer jeder Regenerierungsebene über die Eingabeeinheit einstellbar oder auswählbar ist, vorzugsweise in Abhängigkeit von der zu regenerierenden Gargutart.

Ausführungsformen der Erfindung sind dadurch gekennzeichnet, dass die Regenerierungsdauer für zumindest zwei, vorzugsweise alle, Regenerierungsebenen gleich einstellbar oder eingestellt ist.

Mit der Erfindung wird bevorzugt vorgeschlagen, dass die charakteristische Zeitspanne jeder Uhr die entsprechende Restlaufzeit der Regenerierungsdauer der zu besagter Uhr gehörigen Regenerierungsebene widergibt, die sich aus der Differenz aus besagter Regenerierungsdauer und der seit Initiierung besagter Uhr verstrichenen Zeitdauer ergibt.

Ferner kann erfindungsgemäß vorgesehen sein, dass die Eingabeeinheit zumindest ein Tastenfeld und/oder ein Touchscreen umfaßt.

Ebenfalls wird erfindungsgemäß vorgeschlagen, dass die Eingabeeinheit und die Displayeinheit in einem ausgeformt sind.

Gargeräte gemäß der Erfindung sind gekennzeichnet durch eine zentrale Zeitverwaltung, insbesondere bereitgestellt durch einen Mikroprozessor, in Wirkverbindung mit den Uhren.

Schließlich kann erfindungsgemäß auch vorgesehen sein, dass zumindest ein Regenerierungsparamter, bestimmt insbesondere durch Temperatur und/oder Feuchte im Regenerierungsraum, über eine Steuer- und/oder Regeleinheit steuerbar und/oder regelbar ist, in jeder Regenerierungsebene also solche oder im Regenerierungsraum insgesamt, vorzugsweise in Abhängigkeit von dem Ausgabewert zumindest eines Sensors, wie in Form eines Garprozessfühlers.

Der Erfindung liegt die überraschende Erkenntnis zugrunde, daß durch die Bereitstellung eines Bedienelements freie oder mit Gargut beschickte Regenerierungsebenen sowie Restregenerierungsdauern der beschickten Regenerierungsebenen nach Initiieren der Uhren der jeweils beschickten Regenerierungsebenen auf einfache, flexible und übersichtliche Art und Weise angezeigt werden können. Eine aufwendige Sensorik, die überprüft, ob bspw. ein Behälter in einen Einschub eingeschoben worden ist, ist gemäß der vorliegenden Erfindung nicht erforderlich, was somit Kosten spart. Ferner ermöglicht es die Verwendung besagten Bedienelements, bevorzugt in Form eines Touchscreens, auch die Beschickung von Einschüben mit Tellern zeitlich zu überwachen. Solche Teller werden gewöhnlicherweise auf eine bereits in dem Gargerät befindliche Einschubplatte gestellt, wobei die Teller kein Signal bei Kontakt mit der Einschubplatte oder einem Schalter auslösen müssen. Die Beschickung der Einschübe ist auf einer normalen Displayanzeige des Gargeräts auf einfache und übersichtliche Weise anzeigbar.

Ist in einer bevorzugten Ausführungsform des erfindungsgemäßen Gargeräts für eine bestimmten Gargutart, wie Geflügel, Pizza oder dergleichen, ein Regenerierungsprogramm fest in dem Gargerät gespeichert, so kann die Regenerierung einer Vielzahl von Gargütern einer Gargutart nach einmaligem Auswählen der Gargutart und nach individuellem Anordnen in einer Regenerierungsebene einfach durch einmaliges Berühren der zu besagter Regenerierungsebene gehörigen Taste initiiert werden, was zusätzliche Bedienschritte einspart, da die Regenerierungsdauer nicht über Schalter oder Drehknöpfe wiederholt für jedes zu regenerierende Gargut besagter Gargutart eingestellt werden muß.

Ferner ist durch den erfindungsgemäßen Einsatz jeweils einer Uhr für jeden einzelnen Einschub, die bei Ablauf einer bestimmten Regenerierungsdauer einen Alarm auslöst, eine individuellere Nutzung des Gargeräts insofern möglich, als daß unterschiedliche Gargüter individuell in dem Gargerät, unabhängig von anderen zu regenerierenden Gargütern, regeneriert werden können. Dies führt zu einer besseren Auslastung des Gargeräts und zudem zu einer Zeitersparnis, da nicht gewartet werden muß, bis ein Regenerierungszyklus von Gargut innerhalb des Gargeräts abgeschlossen ist, bis neues Gargut in das Gargerät eingeführt werden kann. Vielmehr ist es mit dem Gargerät der vorliegenden Erfindung möglich, weiteres Gargut auf einem Einschub in dem Gargerät anzuordnen und zu regenerieren, während bereits ein Regenerierungsverfahren von anderem Gargut innerhalb des Gargeräts läuft. Die Regenerierungsdauern unterschiedlicher Gargüter können bei dem erfindungsgemäßen Gargerät auch individuell eingestellt werden.

Der Ablauf einer Regenerierungsdauer wird dem Benutzer durch einen Alarm bei einem erfindungsgemäßen Gargerät mitgeteilt. Dieser Alarm kann ein visueller und/oder akustischer Alarm sein, wobei bevorzugt vorgesehen sein kann, daß der akustische Alarm ausstellbar ist.

In einer besonders bevorzugten Ausführungsform des erfindungsgemäßen Gargeräts ist weiterhin vorgesehen, daß zumindest ein Regenerierungsparameter, wie die Temperatur und/oder die Feuchte, innerhalb des gesamten Regenerierungsraums einheitlich ist. Für einen Fachmann auf diesem Gebiet ist es jedoch ohne weiteres ersichtlich, daß innerhalb des Regenerierungsraums auch unterschiedliche Regenerierungsparameter lokal eingestellt werden können, in Abhängigkeit von dem zu regenerierenden Gargut.

Eine Regelung von Regenerierungsparametern ist beispielsweise in Abhängigkeit von Ausgabewerten eines Garprozessfühlers möglich, wie er in der DE 199 45 021.8 beschrieben ist.

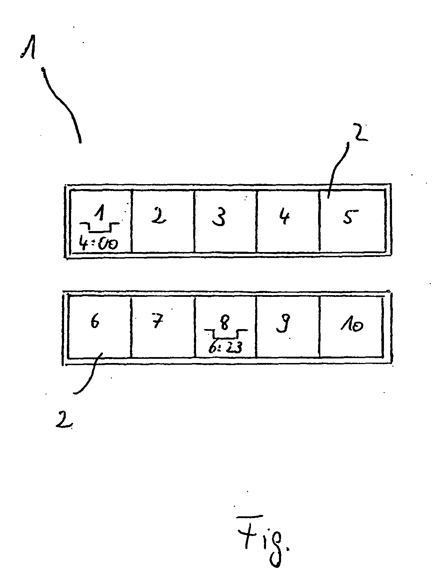

Weitere Merkmale und Vorteile der Erfindung ergeben sich aus der nachfolgenden detaillierten Beschreibung einer Ausführungsform der Erfindung unter Bezugnahme auf die aus einer einzigen Figur bestehenden Zeichnung. Dabei zeigt die Figur einen Ausschnitt eines Bedienelements für ein erfindungsgemäßes Gargerät.

Die Figur zeigt einen Ausschnitt eines Bedienelements 1 für ein erfindungsgemäßes Gargerät (nicht gezeigt), das zehn Einschübe in unterschiedlichen Höhen in seinem Garraum aufnehmen kann, bspw. über ein Hodengestell. Bevorzugt ist das Bedienelement 1 ein Touchscreen. Innerhalb des Bedienelements 1 sind Tastenfelder 2 angeordnet, wobei für jeden Einschub ein Tastenfeld vorgesehen ist. Neben den Tastenfeldern 2 kann das Bedienelement 1 selbstverständlich weitere Elemente umfassen, die zum Betrieb des Gargeräts und zur Programmierung und Einstellung der Tastenfelder 2 notwendig sind.

Gemäß der Figur sind zehn Tastenfelder, eines für jeden der zehn Einschüben (nicht gezeigt), vorgesehen. Sobald ein Einschub mit zu regenerierendem Gargut (nicht gezeigt) beschickt wird, kann derselbe über das Tastenfeld 2 ausgewählt werden. Beispielhaft sind in der Figur die Einschübe 1 und 8 als mit Gargut beschickt bzw. belegt gekennzeichnet. Eine solche Belegung kann durch ein Symbol dargestellt werden, wobei in der Figur eine abstrakte Darstellung eines Einschubs gewählt worden ist. Zusätzlich zu diesem Symbol kann eine weitere visuelle Anzeige, beispielsweise durch ein Blinken der Taste oder der Tastenumrandung, vorliegen. Für die belegten Einschübe, hier die Einschübe 1 und 8, wird zudem die Restregenerierungsdauer aufgezeigt. Hierzu kann an dem Bedienelement 1 auf eine für einen Fachmann bekannte Art und Weise zuvor eine gwünschte Regnerierungsdauer, hier 8 Minuten, beispielsweise über ein Drehrad oder entsprechende Zahlentasten oder dergleichen, für sämtliche der zehn Einschübe eingestellt werden. Die Art und Weise einer solchen Zeiteinstellung ist für einen Fachmann ohne weiters vorstellbar. Die eingestellte Regenerierungsdauer kann beispielsweise durch eine OK-Taste (nicht gezeigt) bestätigt werden. Zum Starten des Regenerierungsverfahrens für einen Einschub kann dann einfach die jeweilige Einschubtaste betätigt werden, so daß die Regenerierungsdauer für jeden Einschub individuell gestartet werden kann. In der Figur wurde die Uhr für den Einschub 1 vor vier Minuten gestartet, so dass sich eine Restregenerierungsdauer von vier Minuten ergibt, während beim Einschub 8 die Restregenerierungsdauer noch sechs Minuten und 23 Sekunden beträgt, also die entsprechende Uhr vor 1 Minute und 36 Sekunden gestartet worden ist.

Während des Betriebs des erfindungsgemäßen Gargeräts kann die Regenerierungsdauer für die Einschübe individuell oder gemeinsam geändert werden. Dies kann beispielsweise erforderlich sein, wenn eine Gargutart gewechselt oder die Temperatur innerhalb des Gargeräts verändert werden soll.

Der Ablauf eines bestimmten Regenerierungsverfahrens für einen Einschub wird durch ein visuelles und/oder akustisches Signal angezeigt. Das akustische Signal kann beispielsweise ein Summer sein, der für eine bestimmte Zeitdauer, beispielsweise zwei Sekunden, summt. Ein visuelles Signal kann dadurch bereitgestellt werden, daß beispielsweise bei Beendigung des Regenerierungsverfahrens die zugehörige Einschubtaste blinkt. Auch können weitere, insbesondere visuelle, Signale vorgesehen sein, beispielsweise während des Betriebs eines Regenerierungsverfahrens für einen bestimmten Einschub, als Aufforderung zum Überprüfen oder Einstellen der Regenerierungsdauern oder dergleichen.

Ebenfalls ist es vorstellbar, daß für zumindest einen bestimmten Einschub ein Regenerierungsprogramm fest in dem Gargerät gespeichert wird, um beispielsweise immer Gargut ein und derselben Gargutart auf einem bestimmten Einschub zu regenerieren, so daß das Einstellen der entsprechenden Uhr nicht stets erneut vorgenommen werden muß, sondern lediglich durch, beispielsweise, eine bestimmte Tastenkombination auf dem Bedienelement das Regenerierungsverfahren gestartet werden kann. So kann für jeden Einschub ein gargutartspezifischer Regenerierungsprogramm gespeichert sein.

Schließlich ist es auch vorstellbar, daß ein Regenerierungsverfahren für einen bestimmten Einschub ohne weiteres vorzeitig beendet werden kann (gegebenenfalls durch Drücken einer entsprechenden Taste). Auch kann es vorkommen, daß alle Regenerierungsverfahren, die gerade innerhalb des Gargeräts betrieben werden, verzögert oder beschleunigt durchgeführt werden sollen. Daher kann auch eine Tastenkombination vorgesehen werden, mit der die Regenerierungsdauer für alle Ebenen gleichzeitig veränderbar ist.

Die in der vorstehenden Beschreibung, in der Zeichnung sowie in den Ansprüchen offenbarten Merkmale der Erfindung können sowohl einzeln als auch in jeder beliebigen Kombination zur Verwirklichung der Erfindung in ihren verschiedenen Ausführungsformen wesentlich sein.

## Patentansprüche

1. Gargerät zum Regenerieren von Gargut in einem Regenerierungsraum, in dem zumindest zwei Regenerierungsebenen, insbesondere jeweils festgelegt durch einen Einschub, in unterschiedlichen Höhen angeordnet oder anordbar sind, wobei jeder Regenerierungsebene eine nach Ablauf einer eingestellten oder einstellbaren Regenerierungsdauer einen Alarm auslösende Uhr zugeordnet ist, **gekennzeichnet durch**
ein Bedienelement (1) mit einer Eingabeeinheit (2) zum manuellen Initiieren der Uhr jeder mit Gargut beschickten Regenerierungsebene und mit einer Displayeinheit (2) zum Anzeigen einer für eine initiierte Uhr charakteristische Zeitspanne.

2. Gargerät nach Anspruch 1, **dadurch gekennzeichnet, dass**
die Regenerierungsdauer jeder Regenerierungsebene über die Eingabeeinheit einstellbar oder auswählbar ist, vorzugsweise in Abhängigkeit von der zu regenerierenden Gargutart.

3. Gargerät nach Anspruch 1 oder 2, **dadurch gekennzeichnet, dass**
die Regenerierungsdauer für zumindest zwei, vorzugsweise alle, Regenerierungsebenen gleich einstellbar oder eingestellt ist.

4. Gargerät nach einem der vorangehenden Ansprüche, **dadurch gekennzeichnet, dass**
die charakteristische Zeitspanne jeder Uhr die entsprechende Restlaufzeit der Regenerierungsdauer der zu besagter Uhr gehörigen Regenerierungsebene widergibt, die sich aus der Differenz aus besagter Regenerierungsdauer und der seit Initiierung besagter Uhr verstrichenen Zeitdauer ergibt.

5. Gargerät nach einem der vorangehenden Ansprüche, **dadurch gekennzeichnet, dass** die Eingabeeinheit (2) zumindest ein Tastenfeld und/oder ein Touchscreen umfaßt.

6. Gargerät nach einem der vorangehenden Ansprüche, **dadurch gekennzeichnet, dass** die Eingabeeinheit und die Displayeinheit in einem ausgeformt sind.

7. Gargerät nach einem der vorangehenden Ansprüche, **gekennzeichnet durch**
eine zentrale Zeitverwaltung, insbesondere bereitgestellt **durch** einen Mikroprozessor, in Wirkverbindung mit den Uhren.

8. Gargerät nach einem der vorangehenden Ansprüche, **dadurch gekennzeichnet, dass** zumindest ein Regenerierungsparamter, bestimmt insbesondere durch Temperatur und/oder Feuchte im Regenerierungsraum, über eine Steuer- und/oder Regeleinheit steuerbar und/oder regelbar ist, in jeder Regenerierungsebene also solche oder im Regenerierungsraum insgesamt, vorzugsweise in Abhängigkeit von dem Ausgabewert zumindest eines Sensors, wie in Form eines Garprozessfühlers.

## Claims

1. Cooking device for regenerating products to be cooked in a regeneration chamber, in which at least two regeneration planes, in particular each secured by an insert module, are or can be arranged at different levels, with each regeneration plane having an associated clock which triggers an alarm after a set or settable regeneration period elapses, **characterized by** an operator control element (1) having an input unit (2) for manually initializing the clock of each regeneration plane which is supplied with products to be cooked, and having a display unit (2) for displaying a time period which is characteristic of an initialized clock.

2. Cooking device according to Claim 1, **characterized in that** the regeneration period of each regeneration plane can be set or selected by means of the input unit, preferably as a function of the type of product to be regenerated.

3. Cooking device according to Claim 1 or 2, **characterized in that** the regeneration period can be or is set to be equal for at least two, preferably all, regeneration planes.

4. Cooking device according to one of the preceding claims, **characterized in that** the characteristic time period for each clock shows the corresponding remaining run time of the regeneration period of the regeneration plane associated with the said clock, the said remaining run time being calculated from the difference between the said regeneration period and the length of time which has passed since the said clock was initialized.

5. Cooking device according to one of the preceding claims, **characterized in that** the input unit (2) comprises at least one keypad and/or one touchscreen.

6. Cooking device according to one of the preceding claims, **characterized in that** the input unit and the display unit are integrally formed.

7. Cooking device according to one of the preceding claims, **characterized by** a central time management means, in particular provided by a microprocessor, operatively connected to the clocks.

8. Cooking device according to one of the preceding claims, **characterized in that** at least one regeneration parameter, determined in particular by temperature and/or moisture in the regeneration chamber, can be controlled and/or regulated by means of a control and/or regulating unit in each regeneration plane as such or in the regeneration chamber as a whole, preferably as a function of the output value from at least one sensor, for example in the form of a cooking-process probe.

## Revendications

1. Appareil de cuisson pour la régénération d'articles à cuire dans un espace de régénération et dans lequel au moins deux niveaux de régénération, en particulier définis respectivement par un dispositif d'introduction, sont disposés ou peuvent ou peuvent être disposés à différentes hauteurs, une horloge déclenchant une alarme après l'expiration d'une durée de régénération réglée ou réglable étant attribuée à chaque niveau de régénération, **caractérisé par**
un élément de commande (1) comprenant une unité d'entrée (2) pour l'activation manuelle de l'horloge de chaque niveau de régénération alimenté avec l'article à cuire et une unité d'affichage (2) pour l'affichage d'un laps de temps caractéristique d'une horloge activée.

2. Appareil de cuisson selon la revendication 1, **caractérisé en ce que**
la durée de régénération de chaque niveau de régénération peut être réglée ou sélectionnée par l'unité d'entrée, de préférence en fonction de l'article à cuire à régénérer.

3. Appareil de cuisson selon la revendication 1 ou 2, **caractérisé en ce que**
la durée de régénération peut être réglée ou est réglable, de façon identique pour au moins deux, de préférence tous les niveaux de régénération.

4. Appareil de cuisson selon l'une quelconque des revendications précédentes, **caractérisé en ce que** le laps de temps caractéristique de chaque horloge restitue le temps d'exécution restant correspondant de la durée de régénération du niveau de régénération appartenant à ladite horloge, qui est obtenu à partir de la différence de ladite durée de régénération et de la durée écoulée depuis l'activation de ladite horloge.

5. Appareil de cuisson selon l'une quelconque des revendications précédentes, **caractérisé en ce que** l'unité d'entrée (2) comprend au moins un clavier et/ou un écran tactile.

6. Appareil de cuisson selon l'une quelconque des revendications précédentes, **caractérisé en ce que** l'unité d'entrée et l'unité d'affichage sont formées d'une seule pièce.

7. Appareil de cuisson selon l'une quelconque des revendications précédentes, **caractérisé par** une gestion de temps centrale, en particulier mise à disposition par un microprocesseur, en liaison active avec les horloges.

8. Appareil de cuisson selon l'une quelconque des revendications précédentes, **caractérisé en ce qu'**au moins un paramètre de régénération, déterminé en particulier par la température et/ou l'humidité dans l'espace de régénération, peut être commandé et/ou réglé par une unité de commande et/ou de réglage, donc individuellement dans chaque niveau de régénération ou globalement dans l'espace de régénération, de préférence en fonction de la valeur de sortie d'au moins un capteur, comme sous la forme d'une sonde de processus de cuisson.
